# EUROPEAN PATENT APPLICATION

(11) **EP 1 445 689 A2**
(43) Date of publication of application: **11.08.2004**
(21) Application number: 03019911.1
(22) Date of filing: 02.09.2003
(51) Int. Cl.: G06F 3/14

(54) **Information processing apparatus for displaying first image data and for transmitting higher resolution second data to portable projector and image data transmittion method used in the apparatus**

(30) Priority: 07.02.2003 JP 2003030781
(71) Applicant: Kabushiki Kaisha Toshiba, Tokyo (JP)
(72) Inventor: Kakemura, Atsushi, 1-1 Shibaura 1-chome Minato-ku Tokyo 105 (JP)
(74) Representative: Henkel, Feiler & Hänzel

(57) **Abstract**

An information processing apparatus performs communication with an external device (2) which displays received image data. The information processing apparatus includes a unit for generating second screen image data from first screen image data which is stored in a memory (15) in the information processing apparatus by a program executed by the information processing apparatus. The resolution of the second screen image data is lower than that of the first screen image data. The information processing apparatus also has a display device (111) which displays the second screen image data, a unit for acquiring the first screen image,data from the memory (15), and a unit for transmitting the first screen image data to the external device.

## Description

The present invention relates to an information processing apparatus such as a PDA (personal digital assistants) and an image data transmission method used in the apparatus.

Various portable information processing apparatuses, such as a PDA and a notebook personal computer, have recently been developed. Most of the apparatuses have a wireless communication function and can wirelessly be connected to other information processing apparatuses and consumer electronic devices.

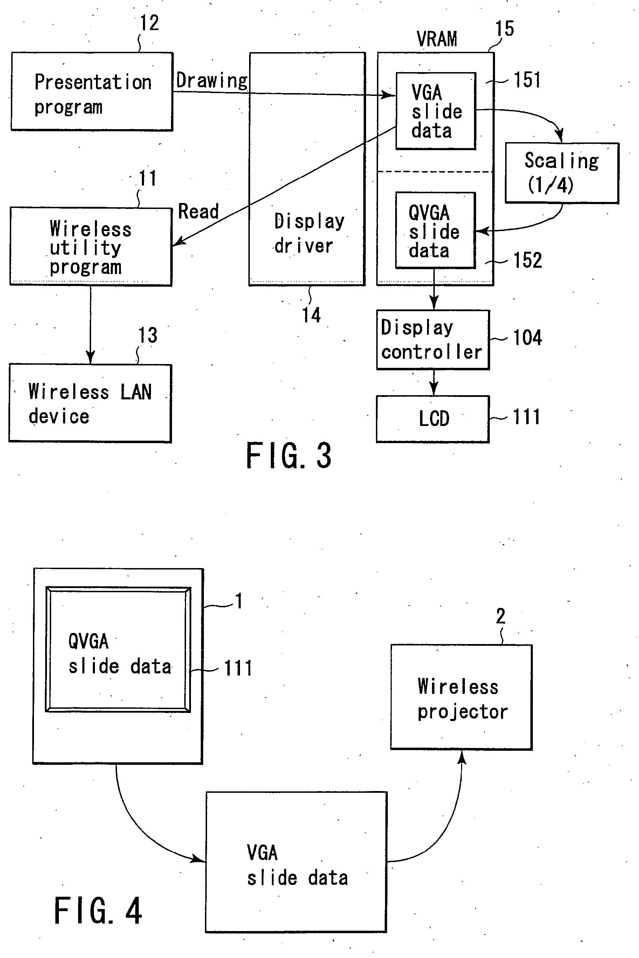

Jpn. Pat. Appln. KOKAI Publication No. 2002-218420 (pages 5 and 6 and FIG. 3) discloses an information display system that displays image data, which is transmitted from an information processing apparatus by a radio signal, on a large-sized screen by means of a projector. In this information display system, image data stored in a storage unit of the information processing apparatus is transmitted to the projector by radio.

In order to make a presentation, it is desirable to project not only specific image data stored in a storage unit but also various screen images, which are to be displayed on a display device of an information processing apparatus operated by a presenter, on a large-sized screen by means of a projector.

In general, however, the display resolution of a display device provided on a portable information processing apparatus such as a PDA is low. If, therefore, a low-resolution screen image displayed on the display device is transmitted to a projector as it is, a very coarse image will be displayed on the screen of the projector.

An object of the present invention is to provide an information processing apparatus and an image data transmission method capable of displaying a high-quality screen image using an external device such as a projector.

According to an embodiment of the present invention, there is provided an information processing apparatus for performing communication with an external device which displays received image data, the apparatus comprising: means for generating second screen image data from first screen image data, resolution of the second screen image data being lower than that of the first screen image data; a display device which displays the generated second screen image data; and means for transmitting the first screen image data to the external device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating a function of an information processing apparatus according to an embodiment of the present invention;
FIG. 2 is a block diagram showing a system configuration of the information processing apparatus according to the embodiment of the present invention;
FIG. 3 is a block diagram illustrating a slide data transmission process performed by the information processing apparatus according to the embodiment of the present invention;
FIG. 4 is a block diagram showing a relationship between slide data displayed on the information processing apparatus according to the embodiment of the present invention and slide data transmitted to a projector;
FIG. 5 is a diagram showing an example of a wireless utility window displayed on a display device of the information processing apparatus according to the embodiment of the present invention;
FIG. 6 is a diagram showing a minimized state of the wireless utility window shown in FIG. 6;
FIG. 7 is a flowchart showing a wireless presentation process that is performed by the information processing apparatus according to the embodiment of the present invention; and
FIG. 8 is a diagram of communications carried out between the information processing apparatus according to the embodiment of the present invention and the projector.

An embodiment of the present invention will now be described with reference to the accompanying drawings.

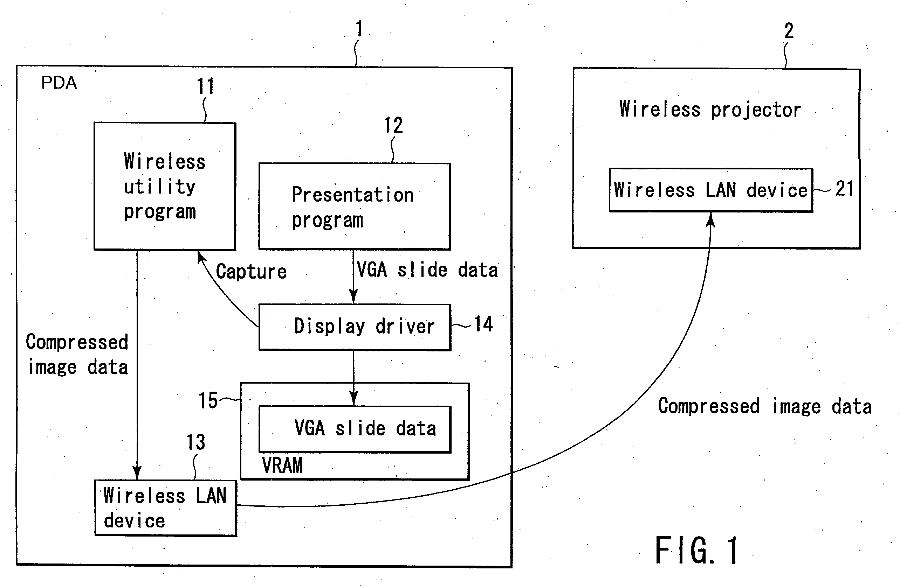

FIG. 1 illustrates an information processing apparatus according to an embodiment of the present invention. The information processing apparatus may, for example, be implemented as a PDA 1. While a PDA is used as an illustrative example, the information processing apparatus is in no way limited to a PDA, and may generally encompass any information processing apparatus. Such an apparatus is preferably portable and may include laptop computers, cell phones having integrated presentation software or integrated PDA functions and the like. The PDA 1 is a portable information processing apparatus that serves as a mobile terminal.. The PDA 1 includes a wireless LAN device 13. The wireless LAN device 13 is a wireless communication device configured to perform a wireless communication according to, for example, an IEEE 802.11a/IEEE 802.11b standard. A wireless presentation function of the PDA 1 will be described below.

The wireless presentation function is a function of displaying screen image data drawn or created by a presentation program 12 on the projection screen of a wireless projector 2. The presentation program 12'is an application program for executing a slide show and can generate image data of VGA (video graphics array) size (640 × 480) as slide data. Hereinafter the slide data of VGA size (640 × 480) will be referred to as VGA slide data. In order to display the VGA slide data on a display device of the PDA 1, the VGA slide data is converted into screen image data size corresponding to the display resolution of the display device of the PDA 1. The display resolution of the display device of the PDA 1 is QVGA (320 × 240) size that is one fourth of VGA (640 × 480) size. Thus, a screen image corresponding to the VGA slide data is reduced to one fourth and displayed on the display device of the PDA 1.

The above-described wireless presentation function is realized using wireless communications between the PDA 1 and the wireless display device 2. The wireless display device 2 includes a wireless LAN device 21. The wireless LAN device 21 is a wireless communication device that is configured to perform a wireless communications according to, for example, an IEEE 802.11a/IEEE 802.11b standard. The wireless display device may have in integrated display (as for example a personal computer), may be connected by wire or wirelessly to a stand alone display (such as a large plasma display), or may project an image onto a screen positioned several meters away as in the case of an optical projector.

A wireless utility program 11 is installed in advance in the PDA 1. The wireless utility program 11 is a program for controlling the wireless presentation. The presentation program 12 converts the slide data stored in slide data memory 12a to VGA slide data in a video memory (VRAM) 15 through a display driver 14. The wireless utility program 11 captures the VGA slide data stored in a video memory (VRAM) 15 and transmits the captured VGA slide data to the wireless display device 2 via a wireless communication between the wireless LAN devices 13 of the PDA 1 and the wireless LAN devices 21 of the wireless display device 2.

In the above case, when the VGA slide data stored in the VRAM 15 is updated, only the updated VGA slide data is transmitted to the wireless display device 2 from the PDA 1. The updated VGA slide data is compression-encoded by the wireless utility program 11 and then sent to the wireless LAN device 13. The VGA slide data is not transmitted to the wireless display device 2 from the PDA 1 until the VGA slide data has completed being updated and has stabilized.

The wireless display device 2 receives the VGA slide data and projects an optical image corresponding thereto on a large-sized screen for projection. In the wireless display device 2, the received VGA slide data is decoded and then written to a frame buffer. The optical image corresponding to the VGA slide data stored in the frame buffer is projected on the large-sized screen.

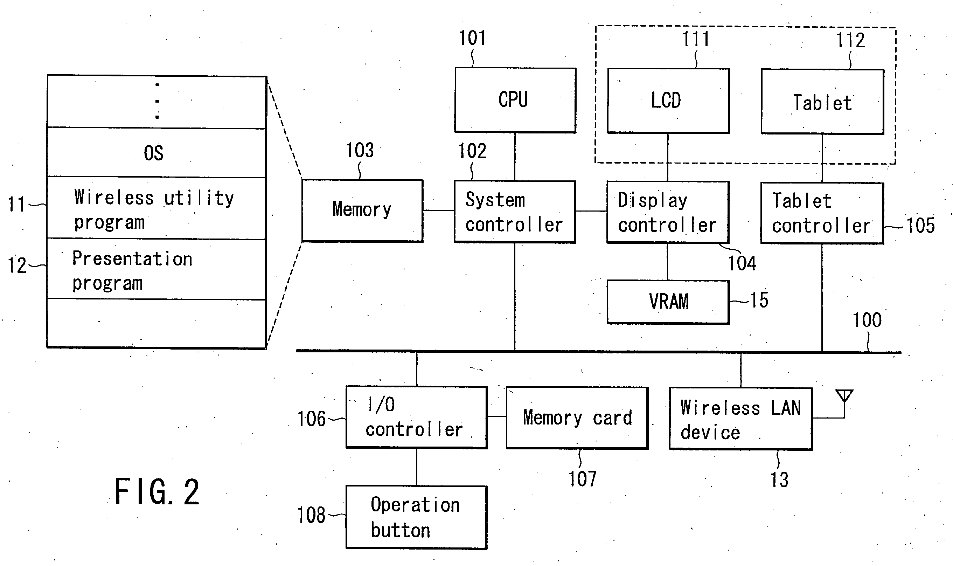

The system configuration of the PDA 1 will now be described with reference to FIG. 2.

As shown in FIG. 2, the PDA 1 includes a CPU 101, a system controller 102, a memory 103, a display controller 104, a tablet controller 105, an I/O controller 106, a memory card 107, an operation button group 108, an LCD 111 and a tablet 112 in addition to the wireless LAN device 13 and the VRAM 15 described above.

The CPU 101 is a processor for controlling the operation of the PDA 1 and executes an operating system (OS) and various application programs/utility programs. The operating system (OS) has a tablet control function for performing a pen-input operation.

The memory 103 includes a nonvolatile memory that stores the operating system (OS) and the application programs/utility programs and a RAM used as a main memory. The nonvolatile memory also stores the above-described wireless utility program 11, presentation program 12 and slide data 12a.

The system controller 102 is a bridge device for connecting a local bus of the CPU 101 and a system bus 100. The system controller 102 includes a memory controller for controlling the memory 103. The display controller 104 controls the LCD 111 used as a display device of the PDA 1 to display the screen image data stored in the VRAM 15 on the LCD 111. The display resolution of the LCD 111 is QVGA (320 × 240), which is a size that is one fourth of VGA (640 × 480) size as described above.

The VRAM 15 has an on-screen area and an off-screen area. The on-screen area is a storage area for storing screen image data of QVGA (320 × 240) size displayed on the LCD 111 and is used as a frame buffer. The display controller 104 reads screen image data in sequence from the on-screen area and displays them on the LCD 111.

The tablet controller 105 controls the tablet 112. The tablet 112 is configured by a transparent coordinate detection device provided on the display surface of the LCD 111. The LCD 111 and tablet 112 make up a pen-input operable touch screen.

The I/O controller 106 controls the memory card 107 that is detachably inserted in the PDA 1 and the operation button group 108. The operation button group 108 includes a plurality of operation buttons, such as a power button, application buttons for starting specific applications, and cursor keys.

A process of transmitting VGA slide data to the wireless display device 2 from the PDA 1 will now be described with reference to FIG. 3.

The presentation program 12 executes a slide show to display a plurality of items of slide data on the LCD 111 in sequence. In the slide show, the presentation program 12 generates VGA slide data from the slide data memory 12a and stores it on an off-screen area 151 of the VRAM 15 through the display driver 14. QVGA slide data that is to be actually displayed on the LCD 111 is produced from screen image data corresponding to the VGA slide data. In this case, a process of reducing the size of the screen image data to one fourth (scaling process) is performed, and the reduced screen image data is stored in an on-screen area 152 of the VRAM 15 as QVGA slide data.

The scaling process is performed by an operating system of the PDA 1 that manages a screen image of the on-screen area 152. Needless to say, the display controller 104 can perform the scaling process under the control of the operating system.

The display controller 104 reads the QVGA slide data from the on-screen area 152 and displays it on the LCD 111. The wireless utility program 11 does not read the QVGA slide data but rather reads the VGA slide data, which is generated by the presentation program 12, from the off-screen area 151 through the display driver 14 and supplies it to the wireless LAN device 13 as transmission data.

In the process described above, as shown in FIG. 4, the original VGA slide data used for generating the QVGA slide data can be transmitted to the wireless display device 2 while the QVGA slide data is being displayed on the LCD 111. Since the VGA slide data is transmitted to the wireless display device 2, higher-quality slide data can be displayed on the screen of the wireless display device 2 than when the QVGA slide data is transmitted to the wireless display device 2.

The process of transmitting the VGA slide data to the wireless display device 2 is performed whenever new VGA slide data is generated by the presentation program 12. In other words, the wireless utility program 11 monitors whether the VGA slide data stored in the off-screen area 151 is updated or not while the PDA 1 is wirelessly connected to the wireless display device 2, and transmits the VGA slide data to the wireless display device 2 when the wireless utility program 11 detects that the VGA slide data is updated.

The wireless presentation function that is performed by the wireless utility program 11 will now be described in detail.

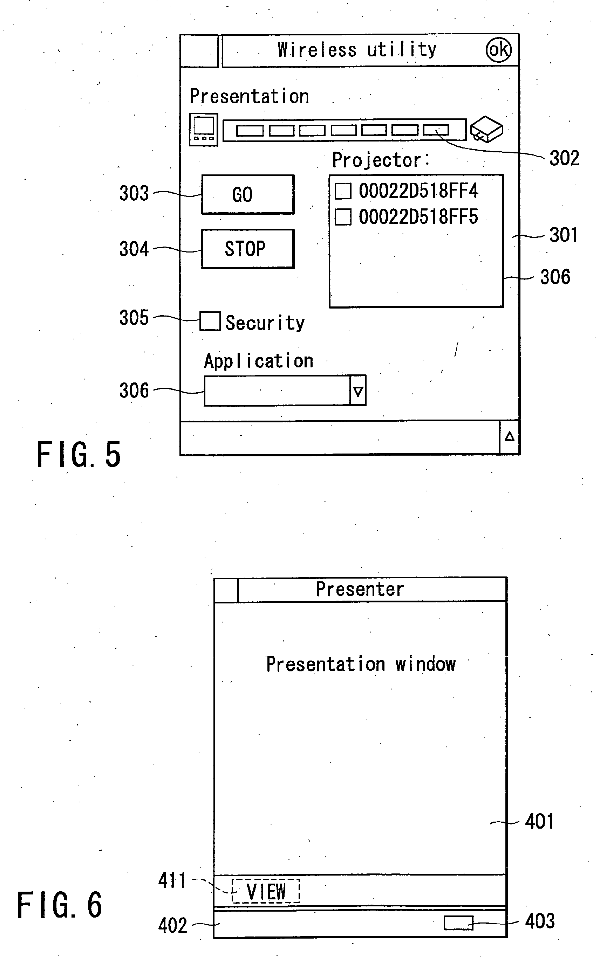

FIG. 5 shows a wireless utility window 301 that is displayed on the LCD 111 by the wireless utility program 11. When a user starts the wireless utility program 11, the wireless utility window 301 shown in FIG. 5 is displayed on the screen of the LCD 111.

As shown in FIG. 5, the wireless utility window 301 displays a transmission indicator 302, a "GO" button 303, a "STOP" button 304, a "Security" check box 305, an application selection pull-down menu 306 and a display device list 307.

The transmission indicator 302 indicates the state of communication between the PDA 1 and the wireless display device 2. The "GO" button 303 is a button for providing an instruction to start the wireless presentation function for automatically transmitting slide data to the wireless display device 2 from the PDA 1. When the "GO" button 303 is tapped (clicked), for example, by a user's pen-input operation, the wireless presentation function is started. The "STOP" button 304 is a button for providing an instruction to stop the wireless presentation function.

The display device list 307 displays a list of wireless display devices that are present within a range which a radio signal reaches from the PDA 1. In other words, the display device list 307 displays a list of device identification information items (e.g., MAC addresses of wireless display devices) corresponding to the wireless display devices detected by the wireless utility program 11.

In the display device list 307, a check box is displayed for each of the device identification information items of the wireless display devices. The user can tap the check box to select a destination display device to which slide data is to be transmitted. For example, in the environment where wireless display devices are present in their respective conference rooms adjacent to each other, the PDA 1 is able to communicate with any desired one of the wireless display devices, and can communicate with more that one display device by selecting the plural display devices desired. If the user selects the destination display device from the display device list 307, the slide data is transmitted to the destination display device selected. Thus, the slide data can be prevented from being erroneously transmitted to an unintentional display device. The "GO" button 303 is not displayed on the wireless utility window 301 until the user selects the destination display device.

The "Security" check box 305 is used to permit the user to designate that the slide data is to be encrypted prior to transmission. When the user checks the "Security" check box 305, the wireless utility program 11 is set in a security mode. In the security mode, the slide data is encrypted and then transmitted to the wireless display device 2.

The application selection pull-down menu 306 is used to permit the user to designate or select one or more of several possible presentation programs to be used in the wireless presentation function.

When the user taps the "GO" button 303, the wireless utility window 301 is minimized and stored in a command bar 402 as an icon 403 as illustrated in FIG. 6. At the same time, the presentation program designated by the application selection pull-down menu 306 is started and an operation window 401 of the presentation program is displayed on the LCD 111. When the user taps a "VIEW" button 411 on the operation window 401 of the presentation program, the presentation program executes the selected slide show.

If the user taps the icon 403, the wireless utility window 301 is displayed again. If the user taps the "STOP" button 304, the wireless presentation function is stopped.

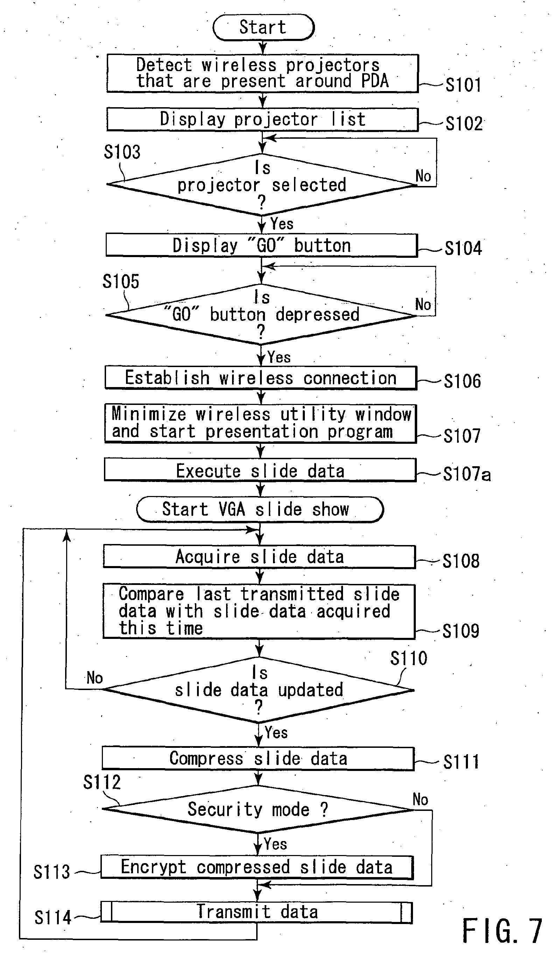

The wireless presentation process performed by the wireless utility program 11 will now be described with reference.to the flowchart shown in FIG. 7.

When the wireless utility program 11 is started, it displays the wireless utility window 301 and detects wireless display devices that are present around the PDA 1 (step S101). In step S101, a device discovery process is performed to detect a device capable of communicating with the PDA 1.

More specifically, the wireless utility program 11 broadcasts a device discovery command to discover a device using the wireless LAN device 13 and waits for a response to the device discovery command. The wireless display device 2 that has received the device discovery command returns to the PDA 1 a response including both an MAC address assigned to the wireless LAN device 21 of the wireless display device 2 and an identifier indicating a device type (=display device) of the wireless display device 2. This response allows the wireless utility program 11 to detect wireless display devices that are present within a range which a radio signal reaches from the PDA 1.

The wireless utility program 11 displays a list of detected wireless display devices on the display device list 307 (step S102). When a user selects a wireless display device from the display device list 307 (YES in step S103), the wireless utility program 11 displays the "GO" button 303 on the wireless utility window 301 (step S104).

When the user taps the "GO" button 303 (YES in step S105), the wireless utility program 11 transmits a connection request to the wireless display device 2 selected from the display device list 307 and establishes a wireless connection with the selected wireless display device 2 (step S106). In step S106, both'a physical wireless link between the PDA 1 and the selected wireless display device 2 is established as well as a session between them.

After the wireless connection with the wireless display device 2 is established, the wireless utility program 11 minimizes the wireless utility window 301 and starts the presentation program 12 (step S107). The started presentation program 12 executes a slide show (VGA slide show) for sequentially storing a plurality of items of VGA slide data on the off-screen area of the VRAM 15 (step S107a).

The wireless utility program 11 acquires the VGA slide data from the off-screen area of the VRAM 15 (step S108).

In step S108, the wireless utility program 11 issues a command to request reading of screen image data from the off-screen area of the VRAM 15 to the display driver 14. The display driver 14 reads the screen image data from the off-screen area through the display controller 104 and sends it to the wireless utility program 11.

In steps S109 and 110, the wireless utility program 11 compares screen image data that is newly acquired and screen image data that is last transmitted in step S114 (described later) to determine whether the VGA slide data is updated or not. If the screen image data acquired in step S108 differs from the last transmitted screen image data, it is recognized that the VGA slide data is updated by the presentation program 12, or that new VGA slide data is generated by the presentation program 12. In this case, the screen image data that is newly acquired in step S108 is determined as data to be transmitted (or updated VGA slide data).

The VGA slide data that is first acquired after the "GO" button 303 is actuated or taped is unconditionally determined as updated VGA slide data.

The process of acquiring the VGA slide data (step S108) and the process of determining whether the acquired VGA slide data differs from the last transmitted VGA slide data (steps S109 and S110) are repeated at regular intervals.

If the acquired VGA slide data is determined as data to be transmitted (updated VGA slide data) (YES in step S110), the wireless utility program 11 encodes the acquired VGA slide data, thus generating compression-encoded VGA slide data (step S111). Then, the wireless utility program 11 determines whether the security mode is selected or not (step S112). If the security mode is selected (YES in step S112), the wireless utility program 11 encrypts the compression-encoded VGA slide data (step S113) and transmits it to the selected display device 2 using the wireless LAN device 13 (step S114).

As described above, since the VGA slide data is compression-encoded and then encrypted, the amount of data to be encrypted can be reduced as compared to encrypting uncompressed data. A key used for the encryption can be generated by authentication and key exchange between, for example, the PDA 1 and the display device 2 connected thereto.

If the operation mode of the wireless LAN device 13 is set in a mode using a WEP (wired equivalent privacy) key, data is encrypted using the WEP key in step S114. In this case, the VGA slide data is double-encrypted by two different encryption processes in steps S113 and S114.

If the security mode is not selected (NO in step S112), the process of step S113 is skipped.

The wireless connection between the PDA 1 and display device 2 is maintained until the user taps the "STOP" button 304. The process from step S108 to step S114 is repeated while the wireless connection is maintained.

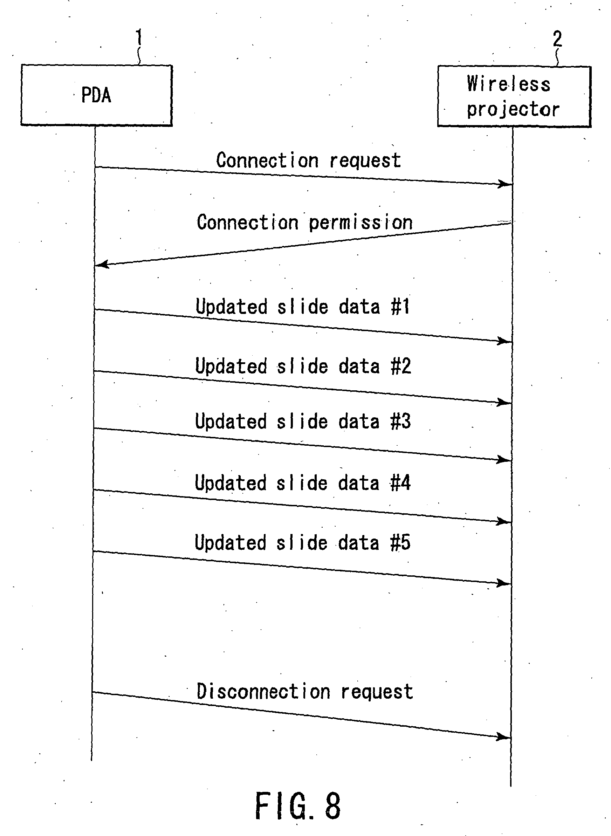

FIG. 8 shows the state of communications performed between the PDA 1 and the wireless display device 2.

In response to the tap of the "GO" button, the PDA 1 transmits a connection request to the wireless display device 2. If the wireless display device 2 notifies the PDA 1 of connection permission (acknowledgement), a wireless connection is established between the PDA 1 and wireless display device 2. Thus, the presentation program 12 is launched and the slide show is started. Whenever the presentation program 12 writes new VGA slide data in the VRAM 15, the VGA slide data is automatically transmitted to the wireless display device 2 by radio.

When the user taps the "STOP" button 304, the wireless presentation process is stopped. The PDA 1 transmits a disconnection request to the wireless display device 2, thereby disconnecting the wireless connection between the PDA 1 and wireless display device 2.

In the wireless presentation process of the present embodiment, as described above, not the QVGA slide data displayed on the LCD 111, but the original VGA slide data used for generating the QVGA slide data is transmitted to the wireless display device 2. Thus, a higher-quality image can be displayed on the screen of the wireless display device 2 than when the QVGA slide data displayed on the LCD 111 is transmitted to the wireless display device 2.

No data is transmitted until the screen image data of the VGA slide data is changed. Useless wireless communication can thus be prevented from being performed.

The memory for storing VGA slide data by the presentation program 12 is not limited to the VRAM 15. For example, the VGA slide data stored in the main memory 103 by the presentation program 12 can be transferred to the on-screen area of the VRAM 15 through the display controller 104. In this case, the screen image data that makes up the VGA slide data is reduced to one fourth by the display controller 104 or the OS and then stored on the on-screen area. The wireless utility program 11 has only to acquire the VGA slide data from the main memory 103.

## Claims

1. An information processing apparatus for performing communication with an external device (2) which displays received image data, the apparatus **characterized by** comprising:
means for generating second screen image data from first screen image data, resolution of the second screen image data being lower than that of the first screen image data;
a display device (111) which displays the generated second screen image data; and
means for transmitting the first screen image data to the external device (2).

2. The information processing apparatus according to claim 1, **characterized in that** the generating means includes means for reducing the first screen image data in order to generate the second screen image data.

3. The information processing apparatus according to claim 1, **characterized by** further comprising means for determining whether the first screen image data is updated, and
wherein the transmitting means includes a wireless communication device (13) which transmits the updated first screen image data, when the determining means determines that the first screen image data is updated.

4. The information processing apparatus according to claim 3, **characterized in that** the determining means includes means for repeatedly determining whether the first screen image data is updated while a wireless connection is established between the external device (2) and the information processing apparatus, and the transmitting means includes means for controlling the wireless communication device (13) such that whenever the first screen image data is updated, the updated first screen image data is transmitted to the external device (2) by a radio signal.

5. The information processing apparatus according to claim 1, **characterized by** further comprising: means for detecting external devices that are present within a wireless communication range of the information processing apparatus;
eans for displaying a list of the detected external devices on the display device (111); and
means for selecting an external device from the list, and wherein the transmitting means includes a wireless communication device (13) which transmits the first screen image data to the external device selected from the list.

6. The information processing apparatus according to claim 1, **characterized in that** said second screen image data is displayed simultaneously with transmitting of the first screen image data.

7. The information processing apparatus according to claim 1 or 6, **characterized in that** said information processing apparatus further comprises:
a first memory storage area (151) for storing said first screen image data;
said generating means includes a converter for converting the first screen image data into said second screen image data by reducing the size of said first screen image data;
a second memory storage area (152) for storing said second screen image data, and
said transmitting means acquiring said first screen image data from said first memory storage area (151) for transmitting same to said external device (2).

8. The information processing apparatus according to claim 7, **characterized in that** said first and second memory storage areas (151,152) are part of the same physical memory (15) and wherein said generating means includes a program executed on said information processing apparatus.

9. The information processing apparatus according to claim 1 or 6, **characterized in that** said information processing apparatus comprises a wireless portable apparatus having a slide presentation function and said external device (2) comprises a wireless slide projector, said first screen image data having a size suitable for display by said wireless slide projector and said second screen image data having a size suitable for display by said display of said wireless portable apparatus.

10. A method of transmitting image data to an external device (2) from an information processing apparatus, the method **characterized by** comprising:
generating second screen image data, which corresponds to a display resolution of a display device (111) of the information processing apparatus, from first screen image data, and;
transmitting the first screen image data to the external device (2).

11. The method according to claim 10, **characterized in that** a display resolution of the first screen image data is higher than the display resolution of the display device.

12. The method according to claim 10, **characterized in that** a display resolution of the first screen image data is higher than the display resolution of the display device, and the generating includes reducing the size of the first screen image data in order to generate the second screen image data.

13. The method according to claim 10, **characterized by** further comprising determining (S109, S110) whether the first screen image data is updated first screen image data, and
wherein the transmitting includes transmitting the updated first screen image data to the external device (2) by wireless transmission when it is determined that the first screen image data is updated.

14. The method according to claim 13, **characterized in that** the determining (S109, S110) includes repeatedly determining whether the first screen image data is updated while a. wireless connection is established between the external device (2) and the information processing apparatus, and the transmitting includes performing a process of transmitting the updated first screen image data to the external device (2) by said wireless transmission whenever the first screen image data is updated.

15. The method according to claim 10, **characterized by** further comprising:
detecting (S101) external devices that are present within a wireless communication range of the information processing apparatus;
displaying a list of detected external devices on the display device (111); and
selecting an external device from the list, and
wherein the transmitting includes transmitting the first screen image data to the external device selected from the list by a radio signal.
